(19) Europäisches Patentamt
European Patent Office
Office européen des brevets

(11) **EP 4 560 040 A1**

# (12) EUROPEAN PATENT APPLICATION

published in accordance with Art. 153(4) EPC

(43) Date of publication:
**28.05.2025 Bulletin 2025/22**

(21) Application number: **23862709.5**

(22) Date of filing: **08.05.2023**

(51) International Patent Classification (IPC):
***C22C 38/00*** *(2006.01)* ***C22C 38/14*** *(2006.01)*
***C22C 38/54*** *(2006.01)* ***B23K 26/21*** *(2014.01)*
***B23K 35/362*** *(2006.01)*

(52) Cooperative Patent Classification (CPC):
**B23K 26/21; B23K 35/362; C22C 38/00; C22C 38/14; C22C 38/54**

(86) International application number:
**PCT/JP2023/017290**

(87) International publication number:
**WO 2024/053160 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 JP 2022140559**

(71) Applicant: **JFE Steel Corporation**
**Tokyo 100-0011 (JP)**

(72) Inventors:
- **TAKADA Atsushi**
  **Tokyo 100-0011 (JP)**
- **OKABE Takatoshi**
  **Tokyo 100-0011 (JP)**

(74) Representative: **Hoffmann Eitle**
**Patent- und Rechtsanwälte PartmbB**
**Arabellastraße 30**
**81925 München (DE)**

## (54) LASER WELDING METHOD AND LASER WELDED JOINT

(57) Provided are a laser welding method for preventing cracking and obtaining a weld joint of a weld metal with excellent toughness, and a laser weld joint. The laser welding method includes butting steel material members, the steel material having a chemical composition including, in mass%, C: 0.04 to 0.15%, Si: 0.05 to 1.00%, Mn: 0.50 to 2.50%, P: 0.030% or less, S: 0.020% or less, Al: 0.050% or less, Ti: 0.050% or less, O: 0.010% or less, and N: 0.008% or less, and having a carbon equivalent Ceq, represented by the following Expression (1), of 0.30 to 0.45, with the balance being Fe and unavoidable impurities, covering a portion on the surfaces of the steel material members including a weld line with flux having a predetermined composition, and performing laser welding thereon to produce a weld joint.

$$Ceq=[C] + [Mn]/6+ [Si]/24+ [Cu]/20+ [Ni]/40+ [Cr]/5+ [Mo]/4 \quad (1)$$

EP 4 560 040 A1

[Fig. 1]

WD
3
2
1
4
1

## Description

### Technical Field

The present invention relates to a laser welding method for steel material used under a low temperature environment of -20°C, and a laser weld joint. In this specification, the numerical range "x to y" represents the range of x to y, both inclusive.

### Background Art

High-energy-density beam welding such as laser welding and electron beam welding has features such that it achieves a greater penetration depth and a higher welding rate than typical arc welding, and does not require the leveling of weld joint after the welding. Because of such features, high-energy-density beam welding is known as a highly efficient welding method. Such high-energy-density beam welding is basically controlled completely automatically and thus does not require skilled labor unlike with arc welding. Besides, such welding is advantageous in that it involves little welding deformation, and thus does not require a leveling operation after the welding. Therefore, in response to the increasing need for labor saving and complete automation at production sites in recent years, high-energy-density beam welding has been expected to become more widely adopted and to be applied to the welding of thick steel plates at full scale.

Meanwhile, a weld metal formed by laser welding is obtained by a process of melting the base metal of the weld together with laser beam energy, and then solidifying the metals. Typically, the chemical composition of a weld metal formed by laser welding is substantially the same as that of the base metal. Thus, it is difficult to increase the toughness of the weld metal.

In this regard, Patent Literature 1 discloses adjusting the ingredients of base metal and also including oxygen in a shielding gas. Patent Literature 1 also discloses that controlling the elemental composition ratio Al/O of a weld metal to be 0.5 to 1.2 can achieve low-temperature toughness of the weld metal.

In addition, Patent Literature 2 discloses a laser welding method for welding members to be joined together by covering their surfaces with flux, and flux for the laser welding. According to such a technology, it is presumably possible to achieve deep penetration and effectively suppress the occurrence of hot cracking without using a low vacuum atmosphere. Patent Literature 2 also discloses that the total content of the added components selected from the group consisting of manganese dioxide, alumina, magnesium oxide, titanium oxide, and silica sand is set to 30 mass% or more as the components of the flux.

### Citation List

#### Patent Literature

Patent Literature 1: JP-2002-121642A
Patent Literature 2: JP- 2020-82159A

### Summary of Invention

#### Technical Problem

However, the method described in Patent Literature 1 involves an increased amount of spatter due to oxygen contained in the shielding gas, which in turn requires more work to remove the spatter, and also has problems with weldability because it involves an increased volume of plume, which results in reduced penetration, for example.

Meanwhile, although Patent Literature 2 discloses that the use of flux in the welding method is effective in achieving deep penetration and suppressing cracking, it does not completely prevent cracking. Further, Patent Literature 2 does not study the mechanical properties of a weld metal formed by laser welding. As a result, it is not always possible to achieve the toughness of a joint required of a structure, which is problematic.

The present invention aims to solve the above problem and provide a laser welding method for preventing cracking and obtaining a weld joint of a weld metal with excellent toughness, and a laser weld joint. The term "excellent toughness" as referred to herein means the toughness when a V-notch Charpy impact test specimen taken from a weld metal in accordance with JIS Z 3128:2017 has an absorbed energy ${}_{v}E_{-20}$ at -20°C of 27 J or more. Note that a Charpy impact test specimen with side grooves has been used for the laser weld joint herein to avoid FPD (Fracture Path Deviation) which is a phenomenon in which a crack formed in a weld metal deviates to the base metal side.

Solution to Problem

To achieve the above object, the inventors studied the chemical composition of the flux as well as the penetration depth and the tendency of the occurrence of cracking, with respect to a laser welding method for joining steel material members in which a portion of the surfaces of the steel material members including a weld line are covered with flux and then irradiated with a laser beam from above. As a result, the inventors found that when the component index X of the flux represented by the following Expression (2) is 0.5 or more, it is possible to achieve deep penetration and suppress the occurrence of cracking at the same time, and as the index X is smaller, deeper penetration is obtained, while when the index X is less than 0.5, cracking occurs.

$$X=\{(CaO)+(MgO)+(CaF_2)+0.5(MnO)+(B_2O_3)\}/\{(SiO_2)+0.5(Al_2O_3)+0.5(TiO_2)\} \quad (2)$$

Here, each (component) of the flux in Expression (2) above represents the content (mass%) of the component. If such a component is not contained, the value of the content (mass%) is 0.

It has been also found that there is a correlation between the index X and the oxygen content [O] in a laser weld metal, and the smaller the index X is, the higher the oxygen content [O] in a weld metal formed by laser welding. The reason why the penetration depth increases as the index X decreases is presumed to be because strong Marangoni convection acts as the oxygen content [O] in the molten metal increases during laser welding, which in turn generates downward convection. In addition, the reason why cracking occurs when the index X is less than 0.5 is presumed that the penetration depth becomes too large with respect to the penetration width.

Next, the influence of the microstructure of a weld metal portion of a laser weld joint on its toughness has been examined. The result shows that a weld metal portion with excellent toughness has many fine acicular ferrite microstructure portions formed therein. Further, as a result of examining oxides in the weld metal of the laser weld joint having acicular ferrite formed therein, it was found that nonmetallic inclusions including multi-phase oxides having a spinel crystal phase as well as an amorphous phase were formed. It was also found that acicular ferrite was formed starting from such nonmetallic inclusions.

As a result of vigorously conducting studies, the inventors found that the following adjustment is preferably performed to promote the formation of an acicular ferrite microstructure and thus obtain excellent toughness.

First, the carbon equivalent Ceq of each steel material represented by the following Expression (1) is adjusted to be in the range of 0.30 to 0.45 so that the hardenability of the steel material is adjusted to be at an appropriate level for the formation of acicular ferrite.

$$Ceq=[C] + [Mn]/6 + [Si]/24 + [Cu]/20 + [Ni]/40 + [Cr]/5 + [Mo]/4 \quad (1)$$

Here, each [element] of the steel material in Expression (1) above represents the content (mass%) of the element, and if such an element is not contained, the value of the content (mass%) is 0.

In addition, the content of oxygen in the laser weld metal as well as the contents of Al and Ti that form the spinel crystal phase are optimized. That is, $\alpha$ represented by the following Expression (3), which includes the Al content [Al] in the steel material and the component index X of the flux described above, is adjusted to be in the range of 0.2 to 1.1. Further, $\beta$ represented by the following Expression (4), which includes the Ti content [Ti] (mass%) in the steel material, the $TiO_2$ content ($TiO_2$) (mass%) in the flux, and the above component index X, is adjusted to be in the range of 0.2 to 2.5.

Accordingly, it has been found that multi-phase oxides having an amorphous phase and a spinel crystal phase are formed, imparting excellent toughness.

$$\alpha= [Al]/ (0.025+0.05\times\log_{0.1}X) \quad (3)$$

$$\beta= \{[Ti] + (TiO_2)/2000\}/ (0.025+0.05\times\log_{0.1}X) \quad (4)$$

The present invention has been completed based on the above findings with further studies conducted thereon, and the gist of the present invention is as follows.

[1] A laser welding method for joining members of a steel material including butting the members of a steel material, using flux to cover a portion of a resulting steel material surface that includes a weld line, and emitting a laser beam from above,

characterized in that

the steel material has a chemical composition including, in mass%:

C: 0.04 to 0.15%,
Si: 0.05 to 1.00%,
Mn: 0.50 to 2.50%,
P: 0.030% or less,
S: 0.020% or less,
Al: 0.050% or less,
Ti: 0.050% or less,
O: 0.010% or less, and
N: 0.008% or less, and

also optionally including at least one element selected from the group consisting of:

Cu: 1.00% or less,
Ni: 2.00% or less,
Cr: 1.00% or less,
Mo: 1.00% or less,
Nb: 0.20% or less,
V: 0.20% or less,
Ca: 0.005% or less,
REM: 0.050% or less, and
B: 0.0030% or less,
with a balance being Fe and unavoidable impurities;

a carbon equivalent Ceq of the steel material represented by the following Expression (1) is in the range of 0.30 to 0.45;
a component index X of the flux represented by the following Expression (2) is in the range of 0.5 to 2.5;
$\alpha$ represented by the following Expression (3) is in the range of 0.2 to 1.1; and
$\beta$ represented by the following Expression (4) is in the range of 0.2 to 2.5:

$$Ceq=[C] + [Mn]/6 + [Si]/24 + [Cu]/20 + [Ni]/40 + [Cr]/5 + [Mo]/4 \quad (1)$$

$$X= \{(CaO) + (MgO) + (CaF_2) + 0.5(MnO) + (B_2O_3)\}/ \{(SiO_2) + 0.5(Al_2O_3) + 0.5(TiO_2)\} \; (2) \quad (2)$$

$$\alpha= [Al]/ (0.025+0.05\times\log_{0.1}X) \quad (3)$$

$$\beta= \{[Ti] + (TiO_2)/2000\}/ (0.025+0.05\times\log_{0.1}X) \quad (4),$$

where each [element] in each expression above represents a content (mass%) of the element in the steel material, each (component) in each expression above represents a content (mass%) of the component in the flux, and if the element or the component is not contained, a value of the content (mass%) is 0.

[2] The laser welding method according to [1] above, in which a thickness of each steel material member is 6 to 50 mm.
[3] The laser welding method according to [1] above, in which a laser welding output of the laser welding is 5 to 80 kW, and a welding rate of the laser welding is in the range of 0.3 to 2.0 m/min.
[4] The laser welding method according to [2] above, in which a laser welding output of the laser welding is 5 to 80 kW, and a welding rate of the laser welding is in the range of 0.3 to 2.0 m/min.
[5] A laser weld joint formed by welding with the laser welding method according to any one of [1] to [4] above, characterized in that

a weld metal has a chemical composition including, in mass%:

C: 0.04 to 0.15%,
Si: 0.05 to 1.00%,
Mn: 0.50 to 2.50%,
P: 0.030% or less,
S: 0.020% or less,
Al: 0.050% or less,
Ti: 0.060% or less,
O: 0.009 to 0.050%, and
N: 0.010% or less, and

also optionally including at least one element selected from the group consisting of:

Cu: 1.00% or less,
Ni: 2.00% or less,
Cr: 1.00% or less,
Mo: 1.00% or less,
Nb: 0.20% or less,
V: 0.20% or less,
Ca: 0.005% or less,
REM: 0.050% or less, and
B: 0.0030% or less,
with a balance being Fe and unavoidable impurities,

a carbon equivalent Ceq represented by the following Expression (5) is in the range of 0.30 to 0.45,
a mass ratio of an Al content to an O content in the weld metal is in the range of 0.2 to 1.1, and
a mass ratio of a Ti content to an O content in the weld metal is in the range of 0.2 to 2.5:

$$Ceq=[C] + [Mn]/6 + [Si]/24 + [Cu]/20 + [Ni]/40 + [Cr]/5 + [Mo]/4 \quad (5),$$

where each [element] of the weld metal in Expression (5) above represents a content (mass%) of the element, and when the element is not contained, a value of the content (mass%) is 0.

[6] The laser weld joint according to [5] above, in which the weld metal has an absorbed energy $_vE_{-20}$, as determined by conducting a V-notch Charpy impact test at a test temperature of -20°C, of 27 J or more.

Advantageous Effects of Invention

The present invention can provide a weld joint with excellent joint toughness in a laser welding method. Thus, the present invention is particularly industrially advantageous.

Brief Description of Drawings

[Fig. 1] Fig. 1 is a schematic view illustrating an embodiment of a laser welding method according to the present invention.
[Fig. 2] Fig. 2 is a schematic view illustrating each of the three faces of a test specimen with side grooves used in a Charpy impact test for a laser weld joint according to the present invention, in which Fig. 2(a) is a side view, Fig. 2(b) is a front view, and Fig. 2(c) is a bottom view.
[Fig. 3] Fig. 3 is a graph illustrating the relationship between the component index X of flux and the penetration depth when the laser welding method according to the present invention is performed.

Description of Embodiments

Hereinafter, a preferred embodiment of the present invention will be described.

This embodiment is directed to a laser welding method for producing a weld joint by laser welding butted steel material members. Note that the thickness of each of the butted steel material members is preferably 6 to 50 mm from the perspective of weldability. The thickness is more preferably 8 to 45 mm.

[Chemical composition of steel material]

First, the steel material used herein has a chemical composition including, in mass%, C: 0.04 to 0.15%, Si: 0.05 to 1.00%, Mn: 0.50 to 2.50%, P: 0.030% or less, S: 0.020% or less, Al: 0.050% or less, Ti: 0.050% or less, O: 0.010% or less, and N: 0.008% or less. Further, the steel material has a chemical composition including a carbon equivalent Ceq, which is represented by the following Expression (1), of 0.30 to 0.45, with the balance being Fe and unavoidable impurities.

$$Ceq=[C] + [Mn]/6 + [Si]/24 + [Cu]/20 + [Ni]/40 + [Cr]/5 + [Mo]/4 \quad (1)$$

Here, each [element] of the steel material in Expression (1) above represents the content (mass%) of the element, and when such an element is not contained, the value of the content (mass%) is 0.

The reasons for limiting the chemical composition of the steel material are as follows. Hereinafter, "%" included in the chemical composition shall mean "mass%."

[C: 0.04 to 0.15%]

C is an element that is effective for increasing the strength of the steel material at a low cost. In this embodiment, the C content needs to be 0.04% or more. Meanwhile, the C content of more than 0.15% causes the resulting weld metal to harden, resulting in lower toughness. Therefore, the C content is limited to the range of 0.04 to 0.15%. Preferably, the C content is set in the range of 0.06 to 0.12%. More preferably, it is set in the range of 0.07 to 0.10%.

[Si: 0.05 to 1.00%]

Si is an element that acts as a deoxidizing element and also contributes to increasing the strength of the steel material. To achieve such effects, the Si content needs to be 0.05% or more. Meanwhile, when the Si content is more than 1.00%, a hard secondary phase (martensite-austenite constituent) is formed in the resulting weld metal portion, reducing the toughness of the weld metal portion. Therefore, the Si content is limited to the range of 0.05 to 1.00%. Preferably, the Si content is set in the range of 0.10 to 0.80%. More preferably, it is set in the range of 0.20 to 0.60%.

[Mn: 0.50 to 2.50%]

Mn is an element that is useful for increasing the strength of the steel material. To achieve such an effect, the Mn content needs to be 0.50% or more. Meanwhile, the Mn content of more than 2.50% causes the resulting weld metal to harden, resulting in lower toughness. Therefore, the Mn content is limited to the range of 0.50 to 2.50%. Preferably, the Mn content is set in the range of 0.80 to 2.00%. More preferably, it is set in the range of 1.00 to 1.80%.

[P: 0.030% or less]

P is an element that reduces the toughness of the steel material and also induces hot cracking in the resulting weld metal. Therefore, in this embodiment, it is preferable to minimize the P content. Meanwhile, the acceptable range of the P content is 0.030% or less. Thus, the P content is limited to 0.030% or less. Note that if the P content is reduced excessively, the cost of the refining process increases. Preferably, the P content is adjusted to 0.005% or more. More preferably, it is set in the range of 0.006 to 0.020%.

[S: 0.020% or less]

S forms MnS in the steel material, which is elongated during rolling to be a cause for lamellar tears. Therefore, in this embodiment, it is preferable to minimize the S content. Meanwhile, the acceptable range of the S content is 0.020% or less. Therefore, the S content is limited to 0.020% or less. Note that if the S content is reduced excessively, the cost of the refining process increases. Thus, the S content is preferably adjusted to 0.003% or more. More preferably, it is set in the range of 0.004 to 0.015%.

[Al: 0.050% or less]

The Al content of more than 0.050% reduces the toughness of the steel material (base metal) due to the dissolution of Al. Therefore, the Al content is limited to 0.050% or less. Meanwhile, Al acts as a deoxidizing element and has effects that contribute to the formation of finer microstructure and increase the toughness of the steel material. To achieve such effects, the Al content is preferably set to 0.004% or more. More preferably, it is set in the range of 0.006 to 0.042%, and even more preferably in the range of 0.010 to 0.038%.

Further, to obtain the acicular ferrite microstructure that contributes to increasing the toughness of the resulting weld metal, it is necessary to, first, control the mass ratio $[Al]_W/[O]_W$ of the Al content (hereinafter also referred to as $[Al]_W$) in the weld metal to the oxygen content (hereinafter also referred to as $[O]_W$) in the weld metal. To this end, it is necessary to adjust the Al content (hereinafter also referred to as $[Al]_B$) in the steel material as well as the chemical composition of the flux to be in an appropriate range. The relationship is described later.

[Ti: 0.050% or less]

The addition of Ti to the steel material forms a Ti-based oxide in the weld metal, and the Ti-based oxide becomes the product nuclei of acicular ferrite. To achieve such an effect, it is necessary to add Ti at 0.003% or more. However, the addition of Ti to the steel material is not inevitable because Ti can also be added to the weld metal from the flux. Meanwhile, when the Ti content in the steel material is more than 0.050%, the toughness of the steel material deteriorates due to the dissolution of Ti. Therefore, the Ti content is limited to 0.050% or less. Preferably, the Ti content is set to 0.040% or less. More preferably, it is set in the range of 0.005 to 0.040%.

Further, to form an acicular ferrite microstructure, it is necessary to control the Al content in the weld metal as described above as well as control the mass ratio $[Ti]_W/[O]_W$ of the Ti content (hereinafter also referred to as $[Ti]_W$) to the oxygen content $[O]_W$ in the weld metal. To this end, it is necessary to adjust each of the Ti content (hereinafter also referred to as $[Ti]_B$) in the steel material, the $TiO_2$ content (hereinafter also referred to as $(TiO_2)$) in the flux, and the chemical composition of the flux to be in an appropriate range. The relationship will be described later.

[O (oxygen): 0.010% or less]

O (oxygen) forms nonmetallic inclusions as oxides in the steel material. Such nonmetallic inclusions becomes the starting points for fractures. Therefore, in this embodiment, it is preferable to minimize the O (oxygen) content. Meanwhile, the acceptable range of the O (oxygen) content is 0.010% or less. Thus, the O (oxygen) content is limited to 0.010% or less. Note that if the O (oxygen) content is reduced excessively, the cost of the refining process increases. Thus, the O (oxygen) content is preferably adjusted to 0.002% or more. More preferably, it is adjusted in the range of 0.003 to 0.008%.

[N: 0.008% or less]

N is an element that is incorporated as an impurity, and the dissolution of N reduces toughness. Therefore, it is preferable to minimize the N content. Meanwhile, the acceptable range of the N content is 0.008% or less. Thus, the N content is limited to 0.008% or less. Note that when the N content is reduced excessively, the cost of the refining process increases. Thus, the N content is preferably adjusted to 0.002% or more. More preferably, it is adjusted in the range of 0.003 to 0.007%.

[Optional composition]

The above chemical composition is the basic composition of the steel material used in this embodiment. In this embodiment, the steel material may further optionally contain, in addition to the above basic composition, at least one element selected from the following chemical composition as appropriate. The chemical composition includes Cu: 1.00% or less, Ni: 2.00% or less, Cr: 1.00% or less, Mo: 1.00% or less, Nb: 0.20% or less, V: 0.20% or less, Ca: 0.005% or less, REM: 0.050% or less, and B: 0.0030% or less.

[Cu: 1.00% or less]

When the Cu content is more than 1.00%, red brittleness is exhibited and surface cracking of the steel material is caused, reducing the productivity of the steel material. Therefore, when Cu is to be contained, it is preferably contained at 1.00% or less. Meanwhile, Cu is an element that increases the strength of the steel material and also increases corrosion resistance. Thus, to obtain such effects, the Cu content is preferably set to 0.10% or more. More preferably, it is set in the range of 0.15 to 0.90%.

[Ni: 2.00% or less]

When the Ni content is more than 2.00%, the production cost increases. Therefore, when Ni is to be contained, it is preferably contained at 2.00% or less. Meanwhile, Ni is an element that increases the strength of the steel material without reducing the toughness of the steel material and also improves the toughness of the welding heat-affected zone. Thus, to obtain such effects, the Ni content is preferably set to 0.10% or more. More preferably, it is set in the range of 0.20 to 1.80%.

[Cr: 1.00% or less]

When the Cr content is more than 1.00%, the toughness of the steel material may be reduced. Therefore, when Cr is to be contained, it is preferably contained at 1.00% or less. Meanwhile, Cr is an element that increases the strength of the steel material. Thus, to obtain such an effect, the Cr content is preferably set to 0.10% or more. More preferably, it is set in the range of 0.15 to 0.90%.

[Mo: 1.00% or less]

When the Mo content is more than 1.00%, the toughness of the steel material may be reduced. Therefore, when Mo is to be contained, it is preferably contained at 1.00% or less. Meanwhile, Mo is an element that increases the strength of the steel material. Thus, to obtain such an effect, the Mo content is preferably set to 0.10% or more. More preferably, it is set in the range of 0.15 to 0.90%.

[Nb: 0.20% or less]

When the Nb content is more than 0.20%, the toughness of the steel material may be reduced. Therefore, when Nb is to be contained, it is preferably contained at 0.20% or less. Meanwhile, Nb is an element that improves hardenability and thus increases the strength of the steel material. Therefore, to obtain such an effect, the Nb content is preferably set to 0.01% or more. More preferably, it is set in the range of 0.02 to 0.16%.

[V: 0.20% or less]

When the V content is more than 0.20%, the toughness of the steel material may be reduced. Therefore, when V is to be contained, it is preferably contained at 0.20% or less. Meanwhile, V is an element that precipitates fine carbide and thus increases the strength of the steel material. Thus, to obtain such an effect, the V content is preferably set to 0.02% or more. More preferably, it is set in the range of 0.04 to 0.16%.

[Ca: 0.005% or less]

When the Ca content is more than 0.005%, coarse CaS increases. Such coarse CaS becomes the starting point for fractures and may reduce the toughness of the steel material. Therefore, when Ca is to be contained, it is preferably contained at 0.005% or less. Meanwhile, Ca is an element that binds to S to form spherical CaS, which contributes to controlling the shape of sulfide. Thus, Ca prevents the occurrence of lamellar tears when tensile stress is applied in the thickness direction of the steel material. To obtain such an effect, the Ca content is preferably set to 0.001% or more. More preferably, it is set in the range of 0.001 to 0.004%.

[REM: 0.050% or less]

When the content of REM (rare earth element) is more than 0.050%, REM segregated at austenite grain boundaries reduces the ductility and causes cracking, which may reduce the productivity of the steel material. Therefore, when REM is to be contained, it is preferably contained at 0.050% or less. Meanwhile, REM binds to S to form sulfide. Such sulfide has ferrite nucleation ability and forms ferrite grains from within austenite grains, which contributes to the formation of finer microstructure. To obtain such an effect, the REM content is preferably set to 0.002% or more. More preferably, it is set in the range of 0.005 to 0.040%.

[B: 0.0030% or less]

When the B content is more than 0.0030%, B is segregated at austenite grain boundaries during casting solidification and thus forms a liquid phase, which may induce cracking. Therefore, when B is to be contained, it is preferably contained at 0.0030% or less. Meanwhile, B binds to N to form BN within austenite grains. BN formed in the heat-affected zone becomes the nucleation site for ferrite and forms finer microstructure, which contributes to increasing the toughness of the heat-affected zone. To obtain such an effect, the B content is preferably set to 0.0005% or more. More preferably, it is set in the range of 0.0008 to 0.0025%.

[Composition of balance]

The steel material has the above chemical composition, with the balance being Fe and unavoidable impurities. Examples of the unavoidable impurities include H, Mg, Zn, Re, Co, Sb, and Bi. The total content of such unavoidable impurities that is acceptable is 0.01% or less. Besides, the content of each element of the above optional composition that is lower than its respective preferred lower limit is acceptable as it has no adverse effects on the resulting laser weld joint. Further, other elements may also be contained as long as the above basic composition and optional composition are satisfied, and such an aspect is also included in the technical scope of the present invention.

[Carbon equivalent Ceq: 0.30 to 0.45]

In this embodiment, it is important that the carbon equivalent Ceq represented by the following Expression (1) is in the range of 0.30 to 0.45.

$$Ceq=[C] + [Mn]/6 + [Si]/24 + [Cu]/20 + [Ni]/40 + [Cr]/5 + [Mo]/4 \quad (1)$$

Here, each [element] of the steel material in Expression (1) above represents the content (mass%) of the element, and if such an element is not contained, the value of the content (mass%) is 0.

As a result of conducting intensive studies to solve the above problems, the inventors found that it is effective to adjust the carbon equivalent Ceq, which is represented by Expression (1) above, to be in the range of 0.30 to 0.45 to secure the strength and toughness of the steel material. The details are described below.

The carbon equivalent Ceq is the numerical value obtained by converting the elements included in the chemical composition of the steel material into a carbon (C) content. To secure the strength and toughness of the steel material, Ceq needs to be in the range of 0.30 to 0.45. When Ceq is less than 0.30, the target strength of the steel material cannot be achieved. Meanwhile, when Ceq is more than 0.45, the strength of the steel material becomes too high, resulting in lower toughness. Preferably, Ceq is set in the range of 0.34 to 0.42.

[Flux]

The flux used in this embodiment need not be limited to a specific flux. Thus, any one of commonly known fused flux or bond flux can be used. For example, a powder material containing the following chemical components as the chemical composition of the flux can be used. Examples of the chemical components include CaO: 8.0 to 28.0%, MgO: 4.0 to 11.0%, $CaF_2$: 3.5 to 30.0%, MnO: 6.0 to 16.0%, $B_2O_3$: 1.0% or less, $SiO_2$: 13.0 to 40.0%, $Al_2O_3$: 2.0 to 19.0%, and $TiO_2$: 4.0 to 20.0%. However, the flux is not limited thereto in this embodiment.

Next, the reasons for limiting the component index X of the flux, which is represented by the following Expression (2), to 0.5 to 2.5 will be described.

$$X= \{(CaO) + (MgO) + (CaF_2) + 0.5(MnO) + (B_2O_3)\}/ \{(SiO_2) + 0.5(Al_2O_3) + 0.5(TiO_2)\} \ (2) \quad (2)$$

Here, each (component) of the flux in Expression (2) above represents the content (mass%) of the component. If such a component is not contained, the value of the content (mass%) is 0.

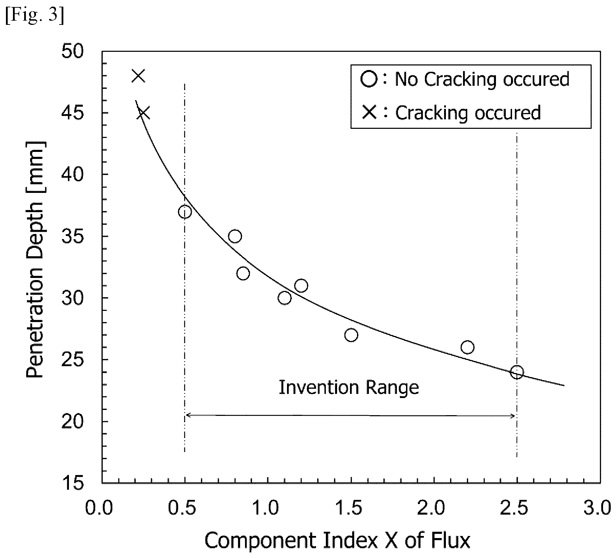

Fig. 3 is a graph illustrating the results of the relationship between the component index X of the flux and the penetration depth in laser welding. As described above, there is a correlation between the oxygen content in the components of the flux and the penetration depth. The smaller the index X is, the higher the oxygen content, increasing the penetration depth. However, when the index X is less than 0.5, the penetration depth becomes too large, resulting in cracking. Meanwhile, when the index X is more than 2.5, the oxygen content in a weld metal obtained through laser welding is reduced, and thus, the amount of oxide required to form acicular ferrite is insufficient. Therefore, the index X is limited to the range of 0.5 to 2.5. Preferably, the index X is set in the range of 0.7 to 2.2.

[Chemical composition of weld metal]

Next, the chemical composition of a weld metal formed by the laser welding according to this embodiment will be described.

The chemical composition of the weld metal is basically the same as the chemical composition of the steel material. However, the chemical composition of the flux used in laser welding is partially incorporated.

The weld metal has a basic chemical composition including C: 0.04 to 0.15%, Si: 0.05 to 1.00%, Mn: 0.50 to 2.50%, P: 0.030% or less, S: 0.020% or less, Al: 0.050% or less, Ti: 0.060% or less, O: 0.009 to 0.050%, and N: 0.010% or less. Further, the weld metal has a chemical composition including a carbon equivalent Ceq, which is represented by the following Expression (5), of 0.30 to 0.45, with the balance being Fe and unavoidable impurities.

$$Ceq=[C] + [Mn]/6 + [Si]/24 + [Cu]/20 + [Ni]/40 + [Cr]/5 + [Mo]/4 \quad (5)$$

Here, each [element] of the weld metal in Expression (5) above represents the content (mass%) of the element, and if such an element is not contained, the value of the content (mass%) is 0.

Further, the weld metal may contain, in addition to the basic composition described above, at least one element selected from the following chemical composition: Cu: 1.00% or less, Ni: 2.00% or less, Cr: 1.00% or less, Mo: 1.00% or less, Nb: 0.20% or less, V: 0.20% or less, Ca: 0.005% or less, REM: 0.050% or less, and B: 0.0030% or less.

[C: 0.04 to 0.15%]

C is an element effective for increasing the strength of the weld metal. **In** this embodiment, the C content is preferably 0.04% or more. Meanwhile, if the C content is more than 0.15%, the weld metal hardens, which may lead to lower toughness. Therefore, the C content is preferably set in the range of 0.04 to 0.15%. More preferably, the C content is set in the range of 0.06 to 0.12%, and even more preferably in the range of 0.07 to 0.10%.

[Si: 0.05 to 1.00%]

Si is an element that acts as a deoxidizing element and also contributes to increasing the strength of the weld metal. To obtain such effects, the Si content is preferably set to 0.05% or more. Meanwhile, when the Si content is more than 1.00%, a hard secondary phase (martensite-austenite constituent) is formed in the weld metal, which may reduce the toughness of the weld metal. Therefore, the Si content is preferably set in the range of 0.05 to 1.00%. More preferably, the Si content is set in the range of 0.10 to 0.80%, and even more preferably in the range of 0.20 to 0.60%.

[Mn: 0.50 to 2.50%]

Mn is a useful element for increasing the strength of the weld metal. To obtain such an effect, the Mn content is preferably set to 0.50% or more. Meanwhile, when the Mn content is more than 2.50%, the weld metal hardens, which may result in lower toughness. Therefore, the Mn content is preferably set in the range of 0.50 to 2.50%, more preferably in the range of 0.80 to 2.00%, and even more preferably in the range of 1.00 to 1.80%.

[P: 0.030% or less]

P is an element that reduces the toughness of the weld metal and also induces hot cracking in the weld metal. Therefore, in this embodiment, it is preferable to minimize the P content. The acceptable range of the P content is 0.030% or less. Thus, the P content is preferably set to 0.030% or less. Note that if the P content is reduced excessively, the production cost for the steel material increases. Thus, the P content is more preferably adjusted to 0.005% or more. Even more preferably, it is set in the range of 0.006 to 0.020%.

[S: 0.020% or less]

S is segregated while the weld metal solidifies and reduces the melting temperature of the weld metal, thus inducing hot cracking. Therefore, in this embodiment, it is preferable to minimize the S content. The acceptable range of the S content is 0.020% or less. Thus, the S content is preferably set to 0.020% or less. Note that when the S content is reduced excessively, the production cost for the steel materials increases. Thus, the S content is more preferably adjusted to 0.003% or more. Even more preferably, it is set in the range of 0.004 to 0.015%.

[Al: 0.050% or less]

When the Al content is more than 0.050%, the toughness of the weld metal is reduced due to the dissolution of Al. Therefore, the Al content is preferably set to 0.050% or less. Meanwhile, Al acts as a strong deoxidizing element and thus preferentially binds to O (oxygen) to form oxide. In addition, Al promotes the formation of a spinel crystal phase within the oxide and thus contributes to the formation of an acicular ferrite microstructure. To obtain such effects, the Al content is preferably set to 0.004% or more, more preferably in the range of 0.006 to 0.042%, and even more preferably in the range of 0.010 to 0.038%.

Further, to form an acicular ferrite microstructure for higher toughness of the weld metal, it is preferable to control $[Ti]_W/[O]_W$ described below and also to control the mass ratio $[Al]_W/[O]_W$ of the Al content to the oxygen content in the weld metal to be in the range of 0.2 to 1.1. This is because when $[Al]_W/[O]_W$ is in such a range, spinel-type oxide, which is a crystal phase effective for the formation of acicular ferrite, is formed. When $[Al]_W/[O]_W$ is less than 0.2, the resulting oxide becomes amorphous, while when $[Al]_W/[O]_W$ is more than 1.1, the entire resulting oxide becomes $Al_2O_3$, which is a crystal phase. To control $[Al]_W/[O]_W$ to be in such a range, $\alpha$ represented by the following Expression (3) may be controlled to be in the range of 0.2 to 1.1, more preferably in the range of 0.3 to 1.0.

$$\alpha = [Al]_B / (0.025 + 0.05 \times \log_{0.1} X) \quad (3)$$

Here, $[Al]_B$ represents the Al content (mass%) in the steel material, and X represents the component index of the flux calculated with Expression (2) above.

[Ti: 0.060% or less]

When the Ti content in the weld metal is more than 0.060%, the toughness of the weld metal is deteriorated due to the dissolution of Ti. Therefore, the Ti content is preferably set to 0.060% or less. Meanwhile, Ti forms a Ti-based oxide in the weld metal, and such a Ti-based oxide becomes the product nuclei of acicular ferrite. To obtain such effects, the Ti content is preferably set to 0.003% or more. More preferably, the Ti content is 0.050% or less. Even more preferably, it is in the range of 0.006 to 0.040%.

Further, to form an acicular ferrite microstructure, it is preferable to control the mass ratio $[Ti]_W/[O]_W$ of the Ti content to the oxygen content in the weld metal to be in the range of 0.2 to 2.5. This is because when $[Ti]_W/[O]_W$ is in such a range, spinel-type oxide, which is a crystal phase effective for the formation of acicular ferrite, is formed. When $[Ti]_W/[O]_W$ is less than 0.2, the resulting oxides have an amorphous single phase, while when $[Ti]_W/[O]_W$ is more than 2.5, all the resulting oxides become $TiO_2$, which is a crystal phase. To control $[Ti]_W/[O]_W$ to be in such a range, $\beta$ represented by the following Expression (4) is preferably controlled to be in the range of 0.2 to 2.5, more preferably in the range of 0.3 to 2.0.

$$\beta = \{[Ti]_B + (TiO_2)/2000\} / (0.025 + 0.05 \times \log_{0.1} X) \quad (4)$$

Here, $[Ti]_B$ represents the Ti content (mass%) in the steel material, $(TiO_2)$ represents the $TiO_2$ content (mass%) in the flux, and X represents the component index of the flux calculated with Expression (2) above.

[O (oxygen): 0.009 to 0.050%]

O (oxygen) forms an oxide in the weld metal. By controlling $[Al]_W/[O]_W$ to be in the range of 0.2 to 1.1 and further controlling $[Ti]_W/[O]_W$ to be in the range of 0.2 to 2.5, a multi-phase oxide having an amorphous phase and a spinel crystal phase can be formed. Acicular ferrite is then formed from such an oxide as a starting point for nucleation, which can increase toughness. To obtain such an effect, the O (oxygen) content is preferably set to 0.009% or more. Meanwhile, when the O (oxygen) content is more than 0.050%, the resulting oxide becomes coarse, and thus becomes the starting point for fractures. Therefore, in this embodiment, the O (oxygen) content is preferably set in the range of 0.009 to 0.050%, and even more preferably in the range of 0.010 to 0.040%.

[N: 0.010% or less]

N is an element that is incorporated in as impurities and the dissolution of N reduces toughness. It is therefore preferable to minimize the N content. The acceptable range of the N content is up to 0.010%. Thus, the N content is preferably set to 0.010% or less, and even more preferably to 0.008% or less.

[Optional composition]

The above chemical composition is the basic composition of the weld metal of this embodiment. In this embodiment, in addition to the above basic composition, the weld metal may optionally contain, at least one element selected from the following chemical composition as appropriate. The chemical composition includes Cu: 1.00% or less, Ni: 2.00% or less, Cr: 1.00% or less, Mo: 1.00% or less, Nb: 0.20% or less, V: 0.20% or less, Ca: 0.005% or less, REM: 0.050% or less, and B: 0.0030% or less.

[Cu: 1.00% or less]

When the Cu content is more than 1.00%, red brittleness is exhibited, resulting in surface cracking of the weld metal. Therefore, when Cu is contained, it is preferable to contain Cu at 1.00% or less. Meanwhile, Cu is an element that increases the strength of the weld metal and also increases corrosion resistance. Therefore, to obtain such effects, the Cu content is preferably set to 0.10% or more. More preferably, it is set in the range of 0.15 to 0.90%.

[Ni: 2.00% or less]

When the Ni content is more than 2.00%, the production cost of steel materials increases. Therefore, when Ni is contained, it is preferable to set the Ni content at 2.00% or less. Meanwhile, Ni is an element that increases the strength of the weld metal without reducing the toughness of the weld metal. Thus, to obtain such an effect, the Ni content is preferably set to 0.10% or more. More preferably, it is set in the range of 0.20 to 1.80%.

[Cr: 1.00% or less]

When the Cr content is more than 1.00%, the toughness of the weld metal may be reduced. Therefore, when Cr is contained, the Cr content is preferably set to 1.00% or less. Meanwhile, Cr is an element that increases the strength of the weld metal. Thus, to obtain such an effect, the Cr content is preferably set to 0.10% or more. More preferably, it is set in the range of 0.15 to 0.90%.

[Mo: 1.00% or less]

When the Mo content is more than 1.00%, the toughness of the weld metal may be reduced. Therefore, when Mo is contained, the Mo content is preferably set to 1.00% or less. Meanwhile, Mo is an element that increases the strength of the weld metal. Therefore, to obtain such an effect, the Mo content is preferably set to 0.10% or more. More preferably, it is set in the range of 0.15 to 0.90%.

[Nb: 0.20% or less]

When the Nb content is more than 0.20%, the toughness of the weld metal may be reduced. Therefore, when Nb is contained, the Nb content is preferably set to 0.20% or less. Meanwhile, Nb is an element that increases the strength of the weld metal by increasing hardenability. Thus, to obtain such an effect, the Nb content is preferably set to 0.01% or more. More preferably, it is set in the range of 0.02 to 0.16%.

[V: 0.20% or less]

When the V content is more than 0.20%, the toughness of the weld metal may be reduced. Therefore, when V is contained, the V content is preferably set to 0.20% or less. Meanwhile, V is an element that increases the strength of the weld metal by precipitating fine carbide particles. Thus, to obtain such an effect, the V content is preferably set to 0.02% or more. More preferably, it is set in the range of 0.04 to 0.16%.

[Ca: 0.005% or less]

When the Ca content is more than 0.005%, coarse CaS particles are formed, resulting in the starting points for fractures. Therefore, When Ca is contained, the Ca content is preferably set to 0.005% or less. Meanwhile, Ca binds to S to form spherical CaS particles that become the nucleation sites. This contributes to the formation of an acicular ferrite microstructure. To obtain such an effect, the Ca content is preferably set to 0.001% or more. More preferably, it is set in the range of 0.002 to 0.004%.

[REM: 0.050% or less]

When the content of REM (rare earth element) is more than 0.050%, REM segregated at austenite grain boundaries may reduce the ductility, which may become a cause for cracking. Therefore, when REM is contained, the REM content is preferably set to 0.050% or less. Meanwhile, REM binds to S to form sulfide. Such sulfide has ferrite nucleation ability and forms ferrite grains from within austenite grains, thus contributing to obtaining a finer microstructure. To obtain such an effect, the REM content is preferably set to 0.002% or more. More preferably, it is set in the range of 0.005 to 0.040%.

[B: 0.0030% or less]

When the B content is more than 0.0030%, the hardenability becomes excessively high, and thus, hard martensite-austenite constituent is formed between acicular ferrite lattices, resulting in degraded toughness. Therefore, when B is contained, the B content is preferably set to 0.0030% or less. Meanwhile, B is segregated at austenite grain boundaries to suppress grain-boundary ferrite with low toughness in the weld metal thus promoting the formation of an acicular ferrite microstructure. Further, B binds to N to form BN within austenite grains, and such BN becomes the nucleation site for acicular ferrite. This can obtain a finer microstructure, and thus contributes to the increase of the toughness of the weld metal. To obtain such effects, the B content is preferably set to 0.0005% or more. More preferably, it is set in the range of 0.0008 to 0.0025%.

[Composition of balance]

The weld metal has the above chemical composition with the balance being Fe and unavoidable impurities. Note that such unavoidable impurities are mixed into the weld metal mainly from the steel materials and the flux. Examples of the unavoidable impurities include H, Mg, Zn, Re, Co, Sb, and Bi. The total allowable content of such unavoidable impurities is 0.01% or less. Additionally, each element of the above-mentioned optional composition may be included, provided that its content is below the respective preferred lower limit, since it does not adversely affect the resulting laser weld joint. Furthermore, other elements may be included as long as they comply with the basic and optional compositions mentioned above. This aspect is also covered within the technical scope of the present invention.

[Laser welding method]

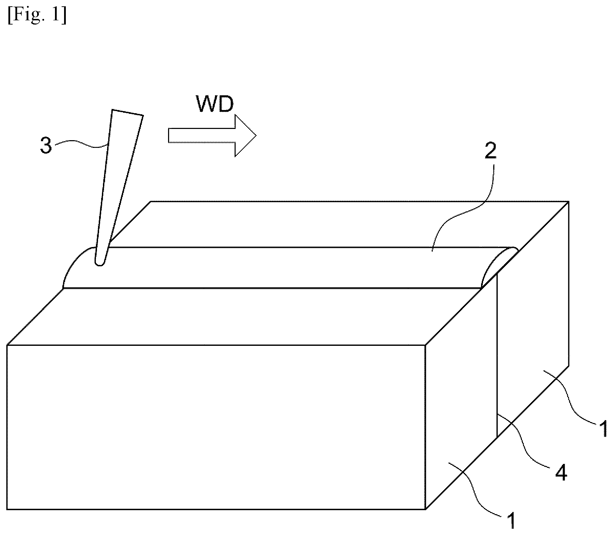

In the laser welding used in this embodiment, as shown in Fig. 1, interfaces 4 of members of a steel material 1 are butted, a portion on the surfaces of the member of the steel material 1 including the weld line 4 is covered with flux 2, and a laser beam 3 is emitted from above to join the steel material members 1. The laser used herein need not be limited to a particular type, but welding is preferably performed with a fiber laser capable of high output while maintaining high beam quality.

It is preferable that the welding conditions of the laser welding be appropriately selected in accordance with the thickness of the material to be welded. For example, when the thickness is 6 mm or more but less than 12 mm, it is preferable to set the laser output to 5 to 10 kW, and set the welding rate to 0.8 to 2.0 m/min. When the thickness is 12 mm or more but less than 24 mm, it is preferable to set the laser output to 8 to 30 kW, and set the welding rate to 0.6 to 1.4 m/min. When the thickness is 24 mm or more but less than 36 mm, it is preferable to set the laser output to 20 to 60 kW, and set the welding rate to 0.5 to 1.0 m/min. When the thickness is in the range of 36 mm to 50 mm, it is preferable to set the laser output to 40 to 80 kW, and set the welding rate to 0.3 to 0.8 m/min.

Example

Molten metals with chemical compositions shown in Table 1 were melted in an arc melting furnace. Then, each molten metal was tapped out into a casting mold to obtain a steel ingot. Then, the steel ingot was hot-rolled to obtain a steel material with a thickness of 50 mm.

[Table 1]

| Steel Material No. | Chemical Component of Steel Material (mass%) | | | | | | | | | | |
|---|---|---|---|---|---|---|---|---|---|---|---|
| | C | Si | Mn | P | S | Al | Ti | O | N | Other elements | Ceq |
| A | 0.08 | 0.11 | 1.71 | 0.010 | 0.008 | 0.030 | 0.010 | 0.003 | 0.004 | | 0.37 |
| B | 0.07 | 0.14 | 2.10 | 0.012 | 0.009 | 0.010 | 0.050 | 0.008 | 0.004 | Ni:0.70 | 0.44 |
| C | 0.04 | 0.32 | 1.50 | 0.010 | 0.004 | 0.018 | 0.000 | 0.003 | 0.006 | | 0.30 |
| D | 0.15 | 0.48 | 0.50 | 0.027 | 0.020 | 0.025 | 0.005 | 0.002 | 0.004 | Cr:0.40, Mo:0.30 | 0.41 |
| E | 0.04 | 0.10 | 2.46 | 0.009 | 0.008 | 0.010 | 0.030 | 0.006 | 0.002 | | 0.45 |
| F | 0.06 | 0.95 | 1.00 | 0.005 | 0.010 | 0.050 | 0.005 | 0.009 | 0.004 | Cu:1.00, Ni:2.00, Mo:0.10 | 0.39 |
| G | 0.07 | 0.40 | 1.40 | 0.015 | 0.010 | 0.012 | 0.020 | 0.006 | 0.004 | Cu:0.50, Ni: 1.20 | 0.38 |
| H | 0.08 | 0.38 | 0.90 | 0.012 | 0.005 | 0.008 | 0.012 | 0.007 | 0.006 | Cr:0.95 | 0.44 |
| I | 0.04 | 0.13 | 0.94 | 0.015 | 0.003 | 0.016 | 0.014 | 0.006 | 0.005 | Mo: 1.00 | 0.45 |
| J | 0.09 | 0.15 | 1.60 | 0.010 | 0.004 | 0.001 | 0.013 | 0.003 | 0.008 | Nb:0.20 | 0.36 |
| K | 0.10 | 0.06 | 1.42 | 0.005 | 0.006 | 0.008 | 0.030 | 0.004 | 0.004 | Ni:0.50, Mo:0.20, V:0.20, REM:0.010, B:0.0010 | 0.40 |
| L | 0.12 | 0.10 | 1.50 | 0.008 | 0.009 | 0.006 | 0.000 | 0.008 | 0.004 | Cr:0.08, Ca:0.005 | 0.39 |
| M | 0.14 | 0.10 | 1.60 | 0.003 | 0.006 | 0.011 | 0.021 | 0.008 | 0.003 | REM:0.050 | 0.41 |
| N | 0.07 | 0.52 | 1.51 | 0.008 | 0.009 | 0.009 | 0.095 | 0.005 | 0.003 | Ca:0.002, B:0.0030 | 0.34 |
| O | 0.10 | 0.30 | 1.30 | 0.011 | 0.007 | 0.060 | 0.009 | 0.006 | 0.004 | Cu:0.20 | 0.34 |
| P | 0.13 | 0.30 | 1.50 | 0.012 | 0.008 | 0.012 | 0.008 | 0.008 | 0.005 | | 0.39 |
| Q | 0.06 | 0.85 | 0.96 | 0.007 | 0.009 | 0.004 | 0.012 | 0.003 | 0.003 | Ni:0.50 | 0.27 |
| R | 0.04 | 0.20 | 2.70 | 0.008 | 0.007 | 0.010 | 0.015 | 0.004 | 0.002 | | 0.50 |
| S | 0.06 | 0.20 | 1.45 | 0.006 | 0.005 | 0.020 | 0.014 | 0.003 | 0.004 | Cu:0.10, Ni:0.20, Cr:0.15, Mo:0.20, Nb:0.02, V:0.05 | 0.40 |

In addition, raw material powder was blended to obtain chemical compositions shown in Table 2. Then, the powder was kneaded with sodium silicate as a binder, granulated, and then baked at 1000°C to obtain flux. The particle size of the flux was adjusted to 0.1 to 2.0 mm.

[Table 2]

| Flux No. | Component Composition of Flux (mass%) | | | | | | | | |
|---|---|---|---|---|---|---|---|---|---|
| | CaO | MgO | $CaF_2$ | MnO | $B_2O_3$ | $SiO_2$ | $Al_2O_3$ | $TiO_2$ | X |
| a | 15.0 | 4.0 | 4.0 | 13.0 | 0.5 | 40.0 | 2.0 | 18.2 | 0.6 |

(continued)

| Flux No. | Component Composition of Flux (mass%) | | | | | | | | |
|---|---|---|---|---|---|---|---|---|---|
| | CaO | MgO | $CaF_2$ | MnO | $B_2O_3$ | $SiO_2$ | $Al_2O_3$ | $TiO_2$ | X |
| b | 17.0 | 9.0 | 17.2 | 8.5 | 1.0 | 32.0 | 6.5 | 6.0 | 1.3 |
| c | 8.0 | 8.0 | 10.0 | 15.3 | 0.6 | 25.0 | 10.0 | 20.0 | 0.9 |
| d | 24.0 | 4.0 | 30.0 | 6.0 | 0.0 | 22.0 | 6.0 | 4.6 | 2.2 |
| e | 17.0 | 9.4 | 25.0 | 9.0 | 1.0 | 24.2 | 6.0 | 6.0 | 1.9 |
| f | 8.0 | 4.0 | 3.5 | 8.8 | 0.0 | 35.0 | 18.7 | 20.0 | 0.4 |
| g | 28.0 | 10.8 | 18.5 | 8.2 | 0.0 | 13.2 | 12.4 | 7.6 | 2.6 |

Two test sheets were prepared from each of the obtained steel materials. The lateral ends of the two test sheets were butted together, forming an I groove with a root gap of 0 mm therebetween. Then, a portion of the surface of the steel material 1 including the weld line 4 was covered with the flux 2, and the laser beam 3 was emitted from above so that a laser weld joint was produced. Note that the lateral end faces of the test sheets to be butted were subjected to cutting work. Table 3 shows the combination of the steel material and flux used to produce each joint.

[Table 3]

| No. | Steel Material No. | Flux No. |
|---|---|---|
| 1 | A | a |
| 2 | B | a |
| 3 | C | a |
| 4 | D | b |
| 5 | E | b |
| 6 | F | b |
| 7 | G | c |
| 8 | H | c |
| 9 | I | c |
| 10 | J | d |
| 11 | K | d |
| 12 | L | d |
| 13 | M | e |
| 14 | N | e |
| 15 | O | a |
| 16 | P | b |
| 17 | Q | b |
| 18 | R | b |
| 19 | S | b |
| 20 | A | f |
| 21 | A | g |

The laser welding was performed with a fiber laser under the following conditions: the laser output was set to 50 kW, the welding rate was set to 0.6 m/min, the defocus distance (distance inwards from the surface of the material to be joined) was set to -40 mm, the laser beam incidence angle was set to 10° (sweptback angle), and the height for spraying the flux was set to 10 mm.

A cross-sectional microstructure was obtained from each of the obtained weld joints to examine the penetration depth as well as the presence or absence of cracks. Specifically, regarding the penetration depth, the length (mm) from the surface of the steel material to the position of the largest penetration of the weld metal along the cross-section of the weld joint was measured. Regarding the presence or absence of cracks, a case where a crack was observed in the cross-section of the weld metal was determined as "present," while a case where no crack was observed was determined as "absent."

Table 4 shows the obtained results.

Chips were collected from a 1 mm diameter area 20 mm from the surface of the test sheet in the center of the weld metal. Then, elementary analysis based on wet analysis was conducted. Table 4 also shows the obtained results.

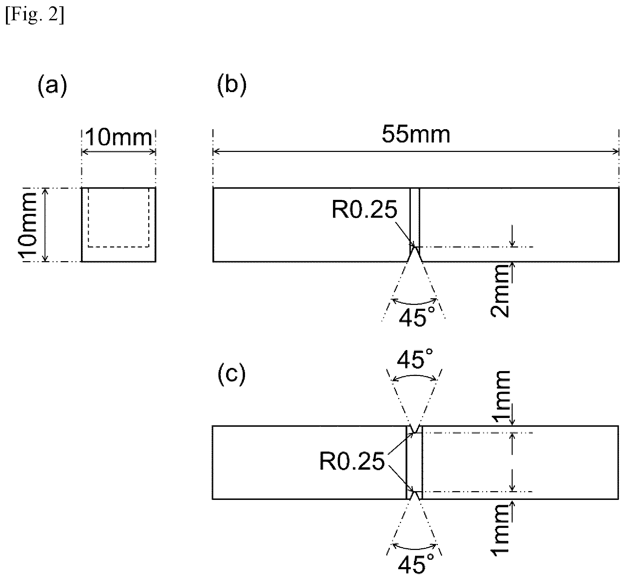

Further, a Charpy impact test specimen (V-notch) was collected from a position 20 mm from the surface of the test sheet of the weld joint in the center of the weld metal in the width direction. Then, a Charpy impact test was conducted at a test temperature of -20°C to determine the absorbed energy $_{V}E_{-20}$ (J). Note that a test specimen with side grooves shown in Fig. 2 was used as the V-notch Charpy impact test specimen herein to avoid a phenomenon of FPD (Fracture Path Deviation) in which a crack deviates to the base metal side. Table 4 shows the obtained results.

[Table 4]

| No. | Penetration depth (mm) | Cracking | Chemical Composition of Weld Metal (mass%) | | | | | | | | | | | α | β | $[Al]_W/[O]_W$ | $[Ti]_W/[O]_W$ | $vE_{-20}$ | Remarks |
|---|---|---|---|---|---|---|---|---|---|---|---|---|---|---|---|---|---|---|---|
| | | | C | Si | Mn | P | S | Al | Ti | O | N | Other Elements | Ceq | | | | | | |
| 1 | 41 | Absent | 0.08 | 0.11 | 1.68 | 0.012 | 0.010 | 0.029 | 0.019 | 0.036 | 0.004 | | 0.36 | 0.8 | 0.5 | 0.8 | 0.5 | 101 | Invention Example |
| 2 | 43 | Absent | 0.07 | 0.14 | 2.06 | 0.014 | 0.011 | 0.010 | 0.059 | 0.042 | 0.004 | Ni:0.70 | 0.44 | 0.3 | 1.6 | 0.2 | 1.4 | 70 | Invention Example |
| 3 | 40 | Absent | 0.04 | 0.33 | 1.47 | 0.012 | 0.004 | 0.017 | 0.009 | 0.035 | 0.006 | | 0.30 | 0.5 | 0.3 | 0.5 | 0.3 | 106 | Invention Example |
| 4 | 33 | Absent | 0.15 | 0.46 | 0.50 | 0.028 | 0.019 | 0.025 | 0.008 | 0.020 | 0.004 | Cr:0.40, Mo:0.30 | 0.41 | 1.3 | 0.4 | 1.3 | 0.4 | 21 | Comparative Example |
| 5 | 34 | Absent | 0.04 | 0.11 | 2.41 | 0.010 | 0.007 | 0.010 | 0.033 | 0.021 | 0.002 | | 0.45 | 0.5 | 1.7 | 0.5 | 1.6 | 128 | Invention Example |
| 6 | 32 | Absent | 0.06 | 0.93 | 0.98 | 0.006 | 0.010 | 0.049 | 0.008 | 0.018 | 0.004 | Cu:1.00, Ni:2.00, Mo:0.10 | 0.39 | 2.5 | 0.4 | 2.7 | 0.4 | 19 | Comparative Example |
| 7 | 37 | Absent | 0.07 | 0.38 | 1.33 | 0.018 | 0.010 | 0.011 | 0.030 | 0.028 | 0.004 | Cu:0.50, Ni:1.20 | 0.36 | 0.4 | 1.1 | 0.4 | 1.1 | 130 | Invention Example |
| 8 | 36 | Absent | 0.08 | 0.38 | 0.86 | 0.015 | 0.007 | 0.008 | 0.022 | 0.026 | 0.006 | Cr:0.95 | 0.43 | 0.3 | 0.8 | 0.3 | 0.8 | 133 | Invention Example |
| 9 | 37 | Absent | 0.04 | 0.14 | 0.87 | 0.018 | 0.005 | 0.015 | 0.024 | 0.029 | 0.005 | Mo:1.00 | 0.44 | 0.6 | 0.8 | 0.5 | 0.8 | 128 | Invention Example |
| 10 | 27 | Absent | 0.09 | 0.15 | 1.57 | 0.010 | 0.002 | 0.001 | 0.015 | 0.008 | 0.008 | Nb:0.20 | 0.36 | 0.1 | 2.0 | 0.1 | 1.9 | 24 | Comparative Example |
| 11 | 28 | Absent | 0.10 | 0.06 | 1.35 | 0.005 | 0.004 | 0.008 | 0.032 | 0.008 | 0.004 | Ni:0.50, Mo:0.20, V:0.20, REM:0.010, B:0.0010 | 0.39 | 1.1 | 4.3 | 1.0 | 4.0 | 25 | Comparative Example |
| 12 | 27 | Absent | 0.12 | 0.10 | 1.50 | 0.008 | 0.009 | 0.006 | 0.002 | 0.009 | 0.004 | Cr:0.08, Ca:0.005 | 0.39 | 0.8 | 0.3 | 0.7 | 0.2 | 60 | Invention Example |
| 13 | 31 | Absent | 0.14 | 0.10 | 1.50 | 0.005 | 0.007 | 0.010 | 0.024 | 0.011 | 0.003 | REM:0.050 | 0.39 | 1.0 | 2.1 | 0.9 | 2.2 | 106 | Invention Example |

(continued)

| No. | Penetration depth (mm) | Cracking | Chemical Composition of Weld Metal (mass%) | | | | | | | | | | | α | β | $[Al]_W/[O]_W$ | $[Ti]_W/[O]_W$ | $vE_{-20}$ | Remarks |
|---|---|---|---|---|---|---|---|---|---|---|---|---|---|---|---|---|---|---|---|
| | | | C | Si | Mn | P | S | Al | Ti | O | N | Other Elements | Ceq | | | | | | |
| 14 | 30 | Absent | 0.07 | 0.51 | 1.48 | 0.010 | 0.009 | 0.009 | 0.098 | 0.012 | 0.003 | Ca:0.002, B:0.0030 | 0.34 | 0.8 | 8.7 | 0.8 | 8.2 | 14 | Comparative Example |
| 15 | 41 | Absent | 0.10 | 0.29 | 1.24 | 0.013 | 0.007 | 0.057 | 0.018 | 0.036 | 0.004 | Cu:0.20 | 0.33 | 1.7 | 0.5 | 1.6 | 0.5 | 18 | Comparative Example |
| 16 | 34 | Absent | 0.13 | 0.30 | 1.50 | 0.012 | 0.008 | 0.012 | 0.011 | 0.022 | 0.005 | | 0.39 | 0.6 | 0.6 | 0.5 | 0.5 | 130 | Invention Example |
| 17 | 33 | Absent | 0.06 | 0.81 | 1.01 | 0.008 | 0.008 | 0.004 | 0.015 | 0.020 | 0.003 | Ni:0.50 | 0.27 | 0.2 | 0.8 | 0.2 | 0.8 | 24 | Comparative Example |
| 18 | 32 | Absent | 0.04 | 0.20 | 2.65 | 0.008 | 0.007 | 0.010 | 0.018 | 0.018 | 0.002 | | 0.49 | 0.5 | 0.9 | 0.6 | 1.0 | 12 | Comparative Example |
| 19 | 33 | Absent | 0.06 | 0.19 | 1.38 | 0.006 | 0.005 | 0.020 | 0.017 | 0.020 | 0.004 | Cu:0.10, Ni:0.20, Cr:0.15, Mo:0.20, Nb:0.02, V:0.05 | 0.39 | 1.0 | 0.9 | 1.0 | 0.9 | 125 | Invention Example |
| 20 | 47 | Present | 0.08 | 0.11 | 1.71 | 0.011 | 0.008 | 0.029 | 0.020 | 0.049 | 0.004 | B:0.0010 | 0.37 | 0.6 | 0.4 | 0.6 | 0.4 | 37 | Comparative Example |
| 21 | 25 | Absent | 0.08 | 0.11 | 1.71 | 0.010 | 0.008 | 0.030 | 0.014 | 0.005 | 0.004 | | 0.37 | 7.8 | 3.6 | 6.0 | 2.8 | 11 | Comparative Example |

In all the invention examples, no cracking was caused, and an absorbed energy $_{V}E_{-20}$ at a Charpy impact test at a test temperature -20°C was 27 J or more. This shows that the weld joint is excellent in both toughness and quality.

In contrast, regarding each of the comparative examples outside the range of the present invention, cracks have occurred or the impact toughness of a weld metal is insufficient. Thus, an intended weld joint has not been obtained.

Reference Signs List

1 steel material
2 flux
3 laser beam
4 weld line (interfaces to be joined together)

**Claims**

1. A laser welding method for joining members of a steel material comprising butting the members of a steel material, using flux to cover a portion of a resulting steel material surface that includes a weld line, and emitting a laser beam from above,
**characterized in that**

the steel material has a chemical composition including, in mass%:

C: 0.04 to 0.15%,
Si: 0.05 to 1.00%,
Mn: 0.50 to 2.50%,
P: 0.030% or less,
S: 0.020% or less,
Al: 0.050% or less,
Ti: 0.050% or less,
O: 0.010% or less, and
N: 0.008% or less, and

also optionally including at least one element selected from the group consisting of:

Cu: 1.00% or less,
Ni: 2.00% or less,
Cr: 1.00% or less,
Mo: 1.00% or less,
Nb: 0.20% or less,
V: 0.20% or less,
Ca: 0.005% or less,
REM: 0.050% or less, and
B: 0.0030% or less,
with a balance being Fe and unavoidable impurities,

a carbon equivalent Ceq of the steel material represented by the following Expression (1) is in the range of 0.30 to 0.45,
a component index X of the flux represented by the following Expression (2) is in the range of 0.5 to 2.5,
$\alpha$ represented by the following Expression (3) is in the range of 0.2 to 1.1, and
$\beta$ represented by the following Expression (4) is in the range of 0.2 to 2.5:

$$Ceq=[C] + [Mn]/6+ [Si]/24+ [Cu]/20+ [Ni]/40+ [Cr]/5+ [Mo]/4 \quad (1)$$

$$X=\{(CaO)+(MgO)+(CaF_2)+0.5(MnO)+(B_2O_3)\}/\{(SiO_2)+0.5(Al_2O_3)+ 0.5(TiO_2)\} \text{ (2)} \quad (2)$$

$$\alpha = [Al] / (0.025 + 0.05 \times \log_{0.1} X) \quad (3)$$

$$\beta = \{[Ti] + (TiO_2)/2000\} / (0.025 + 0.05 \times \log_{0.1} X) \quad (4),$$

where each [element] in each expression represents a content (mass%) of the element in the steel material, each (component) in each expression represents a content (mass%) of the component in the flux, and if the element or the component is not contained, a value of the content (mass%) is 0.

**2.** The laser welding method according to claim 1, wherein a thickness of each steel material member is 6 to 50 mm.

**3.** The laser welding method according to claim 1, wherein:

a laser welding output of the laser welding is 5 to 80 kW, and
a welding rate of the laser welding is in the range of 0.3 to 2.0 m/min.

**4.** The laser welding method according to claim 2, wherein:

a laser welding output of the laser welding is 5 to 80 kW, and
a welding rate of the laser welding is in the range of 0.3 to 2.0 m/min.

**5.** A laser weld joint formed by welding with the laser welding method according to any one of claims 1 to 4, **characterized in that**

a weld metal has a chemical composition including, in mass%:

C: 0.04 to 0.15%,
Si: 0.05 to 1.00%,
Mn: 0.50 to 2.50%,
P: 0.030% or less,
S: 0.020% or less,
Al: 0.050% or less,
Ti: 0.060% or less,
O: 0.009 to 0.050%, and
N: 0.010% or less, and

also optionally including at least one element selected from the group consisting of:

Cu: 1.00% or less,
Ni: 2.00% or less,
Cr: 1.00% or less,
Mo: 1.00% or less,
Nb: 0.20% or less,
V: 0.20% or less,
Ca: 0.005% or less,
REM: 0.050% or less, and
B: 0.0030% or less,
with a balance being Fe and unavoidable impurities,

a carbon equivalent Ceq represented by the following Expression (5) is in the range of 0.30 to 0.45,
a mass ratio of an Al content to an O content in the weld metal is in the range of 0.2 to 1.1, and
a mass ratio of a Ti content to an O content in the weld metal is in the range of 0.2 to 2.5:

$$Ceq=[C] + [Mn]/6+ [Si]/24+ [Cu]/20+ [Ni]/40+ [Cr]/5+ [Mo]/4 \quad (5),$$

where each [element] of the weld metal in Expression (5) above represents a content (mass%) of the element, and if the element is not contained, a value of the content (mass%) is 0.

**6.** The laser weld joint according to claim 5, wherein the weld metal has an absorbed energy ${}_{v}E_{-20}$, as determined by conducting a V-notch Charpy impact test at a test temperature of -20°C, of 27 J or more.

[Fig. 1]

WD
3
2
1
4
1

[Fig. 2]

(a)
(b)
10mm
10mm
55mm
R0.25
45°
2mm
(c)
45°
1mm
R0.25
1mm
45°

[Fig. 3]

○ : No Cracking occured
× : Cracking occured
Penetration Depth [mm]
50
45
40
35
30
25
20
15
0.0
0.5
1.0
1.5
2.0
2.5
3.0
Invention Range
Component Index X of Flux

## INTERNATIONAL SEARCH REPORT

International application No.
**PCT/JP2023/017290**

**A. CLASSIFICATION OF SUBJECT MATTER**

***C22C 38/00***(2006.01)i; ***C22C 38/14***(2006.01)i; ***C22C 38/54***(2006.01)i; ***B23K 26/21***(2014.01)i; ***B23K 35/362***(2006.01)i
FI: B23K26/21 F; C22C38/14; C22C38/54; C22C38/00 301B; B23K35/362 Z

According to International Patent Classification (IPC) or to both national classification and IPC

**B. FIELDS SEARCHED**

Minimum documentation searched (classification system followed by classification symbols)

C22C38/00; C22C38/14; C22C38/54; B23K26/21; B23K35/362

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-115840 A (JFE STEEL CORP) 21 June 2012 (2012-06-21) entire text, all drawings | 1-6 |
| A | JP 2020-147796 A (NIPPON STEEL CORP) 17 September 2020 (2020-09-17) entire text, all drawings | 1-6 |
| A | JP 2002-121642 A (KAWASAKI STEEL CORP) 26 April 2002 (2002-04-26) entire text, all drawings | 1-6 |
| A | JP 2020-82159 A (NADEX CO LTD) 04 June 2020 (2020-06-04) entire text, all drawings | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2023** | **27 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/017290**

| Patent document cited in search report | Publication date (day/month/year) | Patent family member(s) | Publication date (day/month/year) |
|---|---|---|---|
| JP 2012-115840 A | 21 June 2012 | (Family: none) | |
| JP 2020-147796 A | 17 September 2020 | (Family: none) | |
| JP 2002-121642 A | 26 April 2002 | (Family: none) | |
| JP 2020-82159 A | 04 June 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002121642 A
- JP 2020082159 A